# EUROPEAN PATENT SPECIFICATION

(11) **EP 1 481 821 B1**
(45) Date of publication and mention of the grant of the patent: **27.07.2011**
(21) Application number: 04020973.6
(22) Date of filing: 17.08.1999
(51) Int. Cl.: B60C 9/22, B60C 9/20, B60C 9/28

(54) **Pneumatic radial tire**
Radialer Luftreifen
Bandage pneumatique radial

(30) Priority: 19.08.1998 JP 23268398; 11.11.1998 JP 32047298; 28.07.1999 JP 21334499
(43) Date of publication of application: 01.12.2004
(62) Divisional of application: 99306491.4
(73) Proprietor: Bridgestone Corporation, Tokyo 104-0031 (JP)
(72) Inventor: Tsuruta, Makoto, Kodaira City Tokyo (JP); Yamada, Atsushi, Kodaira City Tokyo (JP)
(74) Representative: Whalley, Kevin

(56) References cited:
- EP-A- 0 384 558
- EP-A- 0 511 797
- WO-A-99/24270
- GB-A- 2 072 590
- PATENT ABSTRACTS OF JAPAN vol. 018, no. 274 (M-1611), 25 May 1994 (1994-05-25) -& JP 06 048112 A (BRIDGESTONE CORP), 22 February 1994 (1994-02-22)

## Description

This invention relates to a pneumatic radial tire comprising a belt comprised of at least two belt layers and a belt reinforcing layer for the belt embedded therein with a reinforcing element extending in a circumferential direction.

Recently, the profile flattening of the tire proceeds with the lowering of a floor in a vehicle. As the tire becomes flattened, the outward growth of tire size in a tread portion in a radial direction becomes larger in the inflation under an internal pressure and hence separation failure is easily caused at an end of a belt to lower the tire durability.

In order to solve this problem, there has been proposed a pneumatic tire as described in JP-A-2-208101. JP 06 048112 discloses a known pneumatic radial tire. WO 99/24270 discloses a known tire crown ply reinforcement. GB2072590 discloses a known pneumatic radial tire. These tires comprise a radial carcass toroidally extending between a pair of bead portions, a belt disposed at an outside of the radial carcass in a radial direction of the tire and comprised of at least two belt layers each containing many reinforcing cords embedded therein, the cords of which layers are crossed with each other with respect to an equatorial plane of the tire, a belt reinforcing member disposed at an inside of the belt in the radial direction and comprised of at least one ply having a width narrower than that of the belt and containing plural reinforcing elements embedded therein so as to extend in a circumferential direction of the tire while bending in form of wave or zigzag, and a tread rubber arranged at an outside of the belt in the radial direction.

In such a pneumatic tire, the belt reinforcing member controls the outward growth of tire size of a tread portion, particularly a shoulder portion in the radial direction during the inflation of an internal air pressure to a certain extent, whereby separation failure at a widthwise outer end portion of the belt is controlled to improve the belt durability.

However, the growth of the tire diameter in the tread portion increases with the flattening of the tire, so that the width of the belt reinforcing member should be made wide in accordance of the flattening degree (i.e. aspect ratio) of the tire. In this connection, when the width of the belt reinforcing member in the above pneumatic tire is further widened in accordance with the more flattening of the tire recently demanded (aspect ratio of not more than 0.7), there is caused a problem that the occurrence of belt end separation can not sufficiently be suppressed and particularly the separation failure is created at the widthwise outer end portion of the belt reinforcing member.

The inventors have made various studies with respect to the separation failure of the belt in the above pneumatic tire provided with the belt reinforcing member and have obtained the following knowledge. That is, when the tire rides on protrusions such as stones and the like scattered on road surface at a middle region between the equatorial plane and the tread end during the running of the tire, the belt reinforcing member is pushed inward in the radial direction to form a dent portion. The degree of this dent portion is sharper in the widthwise direction than in the circumferential direction. For this end, when the tire rides over the protrusion, a large axial shearing strain is caused between the belt layers constituting the belt, and particularly a largest axial shearing strain is caused at an end of the belt layer, which brings about the occurrence of the belt end separation as mentioned above.

The inventors have made analyses with respect to the deformation of the belt as mentioned above and confirmed two causes as mentioned below. Firstly, the reinforcing elements of the belt layers constituting the belt are crossed at a small inclination angle with respect to the equatorial plane of the tire, usually within a range of 15-30° for effectively controlling the growth of tire diameter in the tread portion, while the reinforcing elements embedded in the belt reinforcing member extend in parallel to the equatorial plane of the tire as a whole as mentioned above, so that the bending rigidity of the belt and the belt reinforcing member in the widthwise direction of the tire as a whole is fairly low. Secondly, the belt reinforcing member bears a greater part of circumferential tension produced in the tire in the inflation of the internal air pressure because the reinforcing elements embedded in the belt reinforcing member extend in parallel to the equatorial plane, so that the rigidity rapidly lowers at an outer end of the belt reinforcing member in the axial direction, and hence when the belt reinforcing member is subjected to a force from the protrusion as mentioned above, it acts as a single deformable plate and concavely deforms at the axially outer end as a fulcrum (or fixed point).

Furthermore, the inventors have confirmed the following fact. That is, since the belt in a ground contact region is deformed so as to be flat and the reinforcing elements contained therein are inclined toward the side of the equatorial plane so as to extend in the circumferential direction, rubber surrounding the belt is dragged in the circumferential direction by such a deformation of the belt and also the dragged quantity of rubber becomes large near to the widthwise outer end of the belt. In the above tire, since the belt reinforcing member having a width narrower than that of the belt is arranged adjacent to the belt, rubber located near to the widthwise outer end of the belt reinforcing member is also dragged by the widthwise outer end portion of the belt and largely deformed. However, even if the belt reinforcing member is deformed so as to be flat together with the belt, the reinforcing element in the belt reinforcing member extend in the circumferential direction, they are not further stretched in the circumferential direction and hence a great strain is produced in rubber near to the widthwise outer end of the belt reinforcing member, and also such a strain is repeatedly caused every the rotation of the tire. As a result, the separation failure is prematurely caused in the vicinity of the widthwise outer end of the belt reinforcing member.

The inventors have made further studies based on the above knowledge and found that the occurrence of separation failure can be controlled by arranging a belt protection member satisfying a given condition in addition to the belt reinforcing member, or by specifying a relation between widthwise outer ends of the bet and the belt reinforcing member.

According to a first aspect of the invention, there is the provision of a pneumatic radial tire comprising a carcass toroidally extending between a pair of bead portions and comprised of at least one rubberized ply containing a plurality of cords arranged substantially in a radial direction, a belt arranged at an outside of the carcass in the radial direction and comprised of at least two belt layers containing plural cords embedded therein, the cords of which layers being crossed with each other with respect to an equatorial plane of the tire, a belt reinforcing member arranged between the belt and the carcass and comprised of at least one belt reinforcing layer containing a reinforcing element embedded therein and extending in a circumferential direction while bending in form of wave or zigzag, and a tread rubber arranged on an outside of the belt in the radial direction, in which a belt protection member containing many reinforcing elements embedded at an inclination angle with respect to the equatorial plane larger than that of the cord in the belt layer is disposed in the neighborhood of the belt and a widthwise outer end of the belt protection member is located outward from a widthwise outer end of the belt reinforcing member in an axial direction of the tire.

Thus, when the belt protection member having a width wider than that of the belt reinforcing member and having a high bending rigidity in the widthwise direction is disposed in the neighbor hood of the belt, the bending rigidity in the widthwise direction of the belt and the belt reinforcing member as a whole is increased by the belt protection member, while the fulcrum of deformation when being subjected to external force from a protrusion scattered on road surface is shifted outward from the widthwise outer end of the belt reinforcing member to the widthwise outer end of the belt protection member in the axial direction, so that the degree of dent portion produced in the belt becomes slow-moving and shearing strain produced between the belt layers in the widthwise direction becomes small and hence the occurrence of belt end separation is controlled.

In a preferable embodiment of the invention, the widthwise outer end of the belt protection member is located inward from the widthwise outer end of a belt layer having a minimum width among the belt layers in the widthwise direction. Thus, shearing strain produced between the belt and the belt protection member can be controlled to effectively prevent the separation failure therebetween.

In another preferable embodiment of the invention, the belt protection member is disposed on an outside of an outermost belt layer among the belt layers. Thus, the belt can effectively be protected from an external damage such as cut or the like, while the bending rigidity in the widthwise direction of the belt and the belt reinforcing member as a whole can effectively be increased because the belt protection member is far away from a neutral plane of the recess deformation.

In the other preferable embodiment of the invention, an inclining direction of the reinforcing element in the belt protection member is the same as an inclining direction of the cord in the belt layer adjacent to the belt protection member. Because, if the inclining direction of the reinforcing element in the belt protection member is opposite to the inclining direction of the cord in the belt layer, a great shearing strain is produced between the belt protection member and the belt layer to bring about the occurrence of separation failure.

In a further preferable embodiment of the invention, the inclination angle of the reinforcing element in the belt protection member is not less than 30°, preferably 40-70°. In this case, the bending rigidity in the widthwise direction of the belt reinforcing member and the belt as a whole can more effectively be increased while preventing the separation failure.

In a still further preferable embodiment of the invention, a cushion rubber layer is arranged between the widthwise outer end portion of the belt protection member and the widthwise outer end portion of the belt layer adjacent to the belt protection member, whereby shearing strain between the widthwise outer end portion of the belt protection member and the belt layer can effectively be mitigated to more control the separation failure therebetween.

The invention will be described with reference to the accompanying drawings, wherein:
Fig. 1 is a diagrammatically radial-half section view of an embodiment of the pneumatic tire according to the first aspect of the invention;
Fig. 2 is a partial developed view illustrating a lamination structure of carcass and belt in the pneumatic tire of Fig. 1;

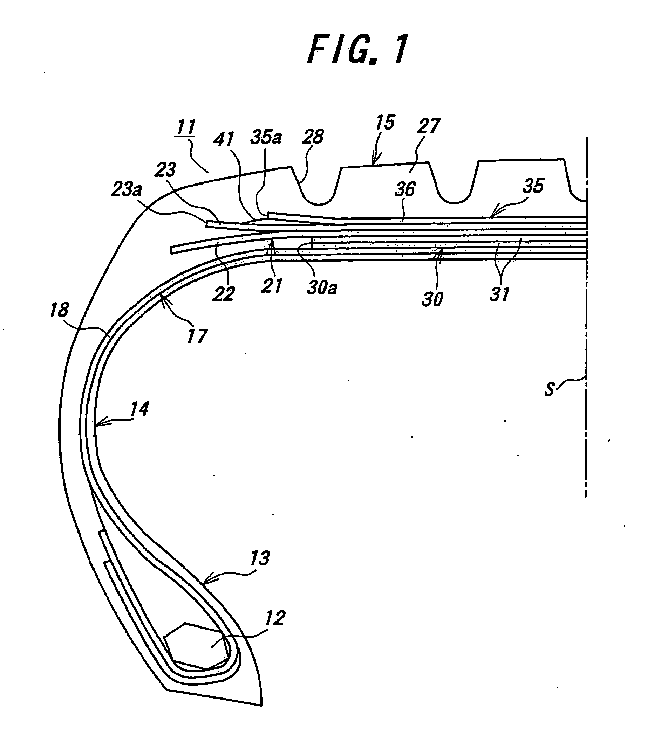

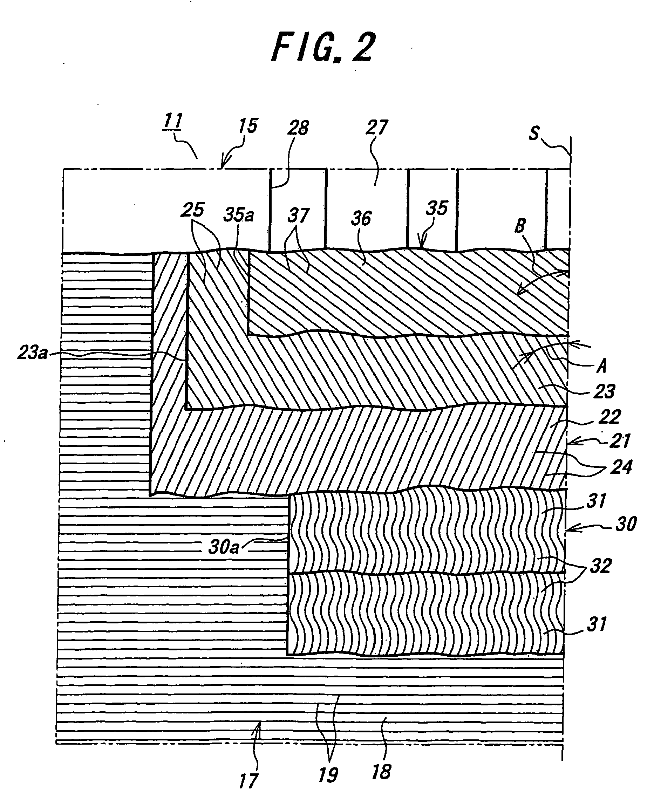

In Figs. 1 and 2, numeral 11 is a heavy duty pneumatic radial tire for truck and bus having an aspect ratio of not more than 0.70, preferably not more than 0.60. This tire 11 comprises a pair of bead portions 13 each embedding an annular bead core 12 therein, a pair of sidewall portions 14 each extending outward from each bead portion 13 in an approximately radial direction, and a tread portion 15 connecting radial outer ends of the sidewall portions 14 to each other. And also, the tire 11 comprises a carcass 17 toroidally extending between the pair of bead cores 12 and reinforcing the sidewall portions 14 and the tread portion 15 and comprised of at least one carcass ply 18 (one ply in the illustrated embodiment). In the carcass ply 18 are embedded many cords 19 extending substantially in the radial direction (meridional direction) of the tire. These cords are made of an inextensible material such as steel cord, aramid fiber cord or monofilament thereof.

A belt 21 controlling the growth of tire size due to the inflation under an internal pressure or the like is disposed at the outside of the carcass in the radial direction and comprised of two or more belt layers (first and second belt layers 22, 23 in the illustrated embodiment). In each of the belt layers 22, 23 are embedded many cords 24, 25 arranged at an inclination angle A of 10-30° with respect to an equatorial plane S of the tire, 22° in the illustrated embodiment. The cords 24, 25 are made of an inextensible material such as steel cord, aramid fiber cord or monofilament thereof. The inclining directions of the cords 24, 25 in the belt layers 22, 23 are opposite to each other. In the illustrated embodiment, the inclining direction of the cord 23 is upward to the right and that of the cord 24 is upward to the left. Moreover, when the number of the belt layers is 3 or more, the cords on and after the third belt layer are inclined in the same direction as in the cord 24 or 25.

A tread 27 is disposed at the outside of the belt 21 in the radial direction and provided on its outer surface with grooves 28 such as main grooves, lateral grooves and the like.

Numeral 30 is a belt reinforcing member interposed between the carcass 17 and the belt 21 and has a width narrower than that of a minimum-width belt layer, the second belt layer 23 in the illustrated embodiment.
The belt reinforcing member 30 is comprised of at least one belt reinforcing layer 31 (two belt reinforcing layers in the illustrated embodiment). In each of the belt reinforcing layers 31 is embedded a reinforcing element 32 extending substantially in parallel to the equatorial plane S. The reinforcing element 32 is made of an inextensible material such as steel cord, aramid fiber cord or monofilament thereof and bent in a wavy form having substantially the same wavelength such as sine curve, square curve, chopping wave or zigzag in a plane parallel to front and rear surfaces of the belt reinforcing layer 31. And also, each of the belt reinforcing layers 31 is constituted by spirally winding a rubberized ribbon-shaped body containing few reinforcing elements 32 on the outside of the carcass 17 many times.

Numeral 35 is a belt protection member disposed adjacent to the belt 21 and comprised of at least one belt protection layer 36 (one belt protection layer in the illustrated embodiment), wherein a widthwise outer end 35a of the belt protection member 35 is located outward from a widthwise outer end 30a of the belt reinforcing member 30 in the widthwise direction. In the belt protection layer 36 are embedded many reinforcing elements 37 each made of an inextensible material such as steel cord, aramid fiber cord or monofilament thereof, wherein an inclination angle B of the reinforcing element 37 with respect to the equatorial plane S is larger than the inclination angle A of the cord 24, 25 in the belt layers 22, 23 with respect to the equatorial plane S. When the belt protection member 35 having a width wider than that of the belt reinforcing member 30 and being high in the bending rigidity in the widthwise direction is disposed on the belt 21 so as to be laid thereon, the bending rigidity in the widthwise direction of the belt 21 and the belt reinforcing member 30 as a whole is increased by the belt protection member 35 and also when the tire is subjected to external force from the protrusion scatted on road surface, the fulcrum of the deformation is shifted outward from the widthwise outer end 30a of the belt reinforcing member 30 to the widthwise outer end 35a of the belt protection member 35 in the widthwise direction and hence the degree of dent portion produced in the belt 21 becomes slow-moving and shearing strain produced between the first and second belt layers 22, 23 in the widthwise direction becomes small, whereby the occurrence of separation failure at the belt end is controlled.

It is favorable that the widthwise outer end 35a of the belt protection member 35 is located inward from the widthwise outer end 23a of the minimum-width belt layer, the second belt layer 23 in the illustrated embodiment in the widthwise direction. In this case, the shearing strain produced between the belt protection member 35 and the belt 21 can be controlled to effectively prevent the separation failure therebetween.

And also, it is favorable that the belt protection member 35 is disposed outward on an outermost belt layer, the second belt layer 23 in the illustrated embodiment in the radial direction. In this case, the belt 21 can effectively be protected from external damage such as cut failure or the like. And also, the belt protection member 35 is far away from a neutral plane of the recess deformation, so that the bending rigidity in axial direction of the belt 21 and the belt reinforcing member 30 as a whole can effectively be increased.

Moreover, the belt protection member 35 may be disposed between the carcass 17 and the belt reinforcing member 30, or between the belt reinforcing member 30 and the belt 21, or between the first and second belt layers 22, 23 of the belt 21. In this case, the bending rigidity in axial direction of the belt 21 and the belt reinforcing member 30 can be increased to a certain extent.

Furthermore, it is favorable that the inclining direction of the reinforcing element 37 in the belt protection member 35 with respect to the equatorial plane S is the same as the inclining direction of the cord 25 in the second belt layer 23 adjacent to the belt protection member 35 and is upward to the left in the illustrated embodiment. If both the inclining directions are opposite to each other, there is a fear of producing a great shearing strain between the belt protection member 35 and the belt 21, concretely the second belt layer 23 to cause the separation failure. However, when the inclining directions are the same as mentioned above, the shearing strain produced between the belt protection member 35 and the belt 21 becomes small and hence the occurrence of separation failure therebetween can be prevented.

The inclination angle B of the reinforcing element 37 in the belt protection member 35 with respect to the equatorial plane S is favorable to be not less than 30° for effectively increasing the bending rigidity in widthwise direction of the belt 21 and the belt reinforcing member 30 as a whole. When the inclination angle B is within a range of 40-70°, the bending rigidity in widthwise direction of the belt 21 and the belt reinforcing member 30 as a whole can considerably be increased while preventing the separation failure between the belt 21 and the belt protection member 35.

As shown in the illustrated embodiment, a cushion rubber layer 41 is disposed between the widthwise outer end portion of the belt protection member 35 and the widthwise outer end portion of the second belt layer 23 adjacent thereto so as to make a distance between the reinforcing element 37 and the cord 25 at widthwise outer end portions of the belt protection layer 36 and the second belt layer 23 larger than a total value of coating rubber gauge for the belt protection layer 36 and coating rubber gauge for the second belt layer 23. As the inclination angle B of the reinforcing element 37 in the belt protection member 35 becomes large, the shearing strain between the widthwise outer end portions of the belt protection member 35 and the belt 21 increases, but the use of the cushion rubber layer as mentioned above effectively absorbs and buffers such an increased shearing strain to control the occurrence of the separation failure. In order to ensure the control of the separation failure, it is favorable to use the cushion rubber layer 41 having such a thickness that the distance between the reinforcing element 37 and the cord 25 at the widthwise outer end portions of the belt protection member 25 and the second belt layer 23 is not less than 1.5 mm.

The following examples are given in illustration of the invention and are not intended as limitations thereof.

### Example 1

There are provided a conventional tire, comparative tires 1-3 and test tires 1-14, respectively, wherein each of these tires has a tire size of 285/60R22.5 and widths of first and second belt layers are 240 mm and 220 mm, respectively, and inclination angles of cords in the first and second belt layers are 22° with respect to the equatorial plane, respectively, and the width of the belt reinforcing member is 160 mm.

The conventional tire is not provided with a belt protection member. In the comparative tire 1, the inclination angle B of the reinforcing element in the belt protection member is the same as the inclination angle A of the cord in the belt and the width of the belt protection member is narrower than the width of the belt reinforcing member (the widthwise outer end of the belt protection member is located inward from the widthwise outer end of the belt reinforcing member in the widthwise direction). In the comparative tire 2, the inclination angle B of the reinforcing element in the belt protection member is the same as the inclination angle A of the cord in the belt likewise the comparative tire 1, but the width of the belt protection member is wider than the width of the belt reinforcing member (the widthwise outer end of the belt protection member is located outward from the widthwise outer end of the belt reinforcing member in the widthwise direction). In the comparative tire 3, the inclination angle B of the reinforcing element in the belt protection member is larger than the inclination angle A of the cord in the belt but the width of the belt protection member is narrower than the width of the belt reinforcing member (the widthwise outer end of the belt protection member is located inward from the widthwise outer end of the belt reinforcing member in the widthwise direction).

In the test tires 1-14, the width of the belt protection member is wider than the width of the belt reinforcing member (the widthwise outer end of the belt protection member is located outward from the widthwise outer end of the belt reinforcing member in the widthwise direction) and the inclination angle B of the reinforcing element in the belt protection member is larger than the inclination angle A of the cord in the belt. In the test tires 1-7, the inclination angle B is gradually increased toward the test tire 7 provided that the other dimensions are the same. The width of the belt protection member is smaller than the width of the minimum-width belt layer (the widthwise outer end of the belt protection member is located inward from the widthwise outer end of the minimum-width belt layer in the radial direction) in the test tires 1-7, but the width of the belt protection member is larger than the width of the minimum-width belt layer (the widthwise outer end of the belt protection member is located outward from the widthwise outer end of the minimum-width belt layer in the radial direction) in the test tire 8.

Further, the belt protection member is arranged on the outside of the outermost belt layer in the radial direction in the test tires 1-7, while the belt protection member is arranged between the belt reinforcing member and the belt (shown by X in Table 1) in the test tire 9, between the carcass and the belt reinforcing member (shown by Y in Table 1) in the test tire 10, and between the two belt layers constituting the belt (shown by Z in table 1) in the test tire 11. In the test tires 1-7, the inclining direction of the reinforcing element in the belt protection member is the same as the inclining direction of the cord in the belt layer adjacent to the belt protection member, while the inclining direction of the reinforcing element in the belt protection member is opposite to the inclining direction of the cord in the belt layer adjacent to the belt protection member in the test tire 12.

In the test tires 1-7, a cushion rubber layer is disposed between the widthwise outer end portion of the belt protection member and the widthwise outer end portion of the belt layer adjacent thereto so that a rubber gauge between the reinforcing element of the belt protection member and the cord of the belt layer is 1.5 mm, while in the test tire 13, the use of the cushion rubber layer is omitted so that the rubber gauge between the reinforcing element and the cord is 0.6 mm. And also, the width of the belt protection member is 190 mm in the test tires 1-7, while the width of the belt protection member in the test tire 14 is somewhat narrower than those of the test tires 1-7 and is 170 mm.

In Table 1 are shown concrete numerical values of width of belt protection member (mm), inclination angle of reinforcing element in belt protection member with respect to equatorial plane or inclination angle (degree) of reinforcing element and rubber gauge (mm) between reinforcing element in widthwise outer end of belt protection member and cord in widthwise outer end of belt layer adjacent thereto and position of belt protection member arranged, respectively.

Each of these tires is mounted onto a rim of 9.00 x 22.5 and inflated under an internal pressure of 9.0 kgf/cm² and run on a drum provided with protrusions at a speed of 60 km/h under a load of 3150 kg until the occurrence of the failure (separation failure) in the belt or belt protection member to measure a running distance. The result is also shown by an index on the basis that the conventional tire is 100 in Table 1, wherein an index value of not less than 120 is a commercially required level and an index value of not less than 140 is a preferable value. The failure position is also shown in Table 1, wherein "between belt layers" means that the separation failure is caused between the widthwise outer end portions of the first and second belt layers and "outermost layer end" means that the separation failure is caused at the widthwise outer end of the belt protection member.

**Table 1 (a)**

| | Conventional tire | Comparative tires | | | Test tires | | | | |
|---|---|---|---|---|---|---|---|---|---|
| | | 1 | 2 | 3 | 1 | 2 | 3 | 4 | 5 |
| Width of belt protection member | - | 120 | 190 | 120 | 190 | 190 | 190 | 190 | 190 |
| Inclination angle of reinforcing element | - | 22 | 22 | 52 | 25 | 30 | 40 | 52 | 66 |
| Rubber gauge | - | 1.5 | 1.5 | 1.5 | 1.5 | 1.5 | 1.5 | 1.5 | 1.5 |
| Position of belt protection member | - | outermost side | outermost side | outermost side | outermost side | outermost side | outermost side | outermost side | outermost side |
| Running distance on drum | 100 | 100 | 102 | 112 | 112 | 122 | 147 | 157 | 159 |
| Failure position | between belt layers | between belt layers | between belt layers | between belt layers | between belt layers | between belt layers | between belt layers | between belt layers | between belt layers |

**Table 1 (b)**

| | Test tires | | | | | | | | |
|---|---|---|---|---|---|---|---|---|---|
| | 6 | 7 | 8 | 9 | 10 | 11 | 12 | 13 | 14 |
| Width of belt protection member | 190 | 190 | 230 | 190 | 190 | 190 | 190 | 190 | 170 |
| Inclination angle of reinforcing element | 70 | 75 | 66 | 66 | 66 | 66 | -66 | 66 | 66 |
| Rubber gauge | 1.5 | 1.5 | 1.5 | 1.5 | 1.5 | 1.5 | 1.5 | 0.6 | 1.5 |
| Position of belt protection member | outermost side | outermost side | outermost side | X | Y | Z | outermost side | outermost side | outermost side |
| Running distance on drum | 149 | 124 | 128 | 123 | 126 | 121 | 122 | 126 | 141 |
| Failure position | between belt layers | outermost layer end | outermost layer end | between belt layers | between belt layers | between belt layers | outermost layer end | outermost layer end | between belt layers |

As seen from Table 1, the comparative tires 1-3 can not substantially control the occurrence of separation failure though the running distance is somewhat increased as compared with the conventional tire. In the test tires 1-7, as the inclination angle of the reinforcing element in the belt protection member becomes large, the effect of controlling the separation failure becomes high, but when the inclination angle exceeds 70°, the separation failure is caused at the widthwise outer end of the belt protection member and the running distance becomes short. Further, the effect of controlling the occurrence of separation failure becomes larger in the test tire 5 as compared with the case that the widthwise outer end of the belt protection member is located inward from the widthwise outer end of the minimum-width belt layer in the widthwise direction as in the test tire 8, or that the belt protection member is arranged between the belt reinforcing member and the belt or between the carcass and the belt reinforcing member or between the belt layers of the belt as in the test tires 9-11, or that the inclining direction of the reinforcing.element in the belt protection member is opposite to the inclining direction of the cord in the belt layer adjacent thereto as in the test tire 12, or that the cushion rubber layer is omitted between the widthwise outer end portion of the belt protection member and the widthwise outer end portion of the belt layer adjacent thereto as in the test tire 13.

As mentioned above, according to the invention, the occurrence of separation failure due to the deformation based on the riding on the protrusion as well as the occurrence of separation failure in the vicinity of the widthwise outer end of the belt reinforcing member can effectively be prevented while controlling the outward growth of tire size in the tread portion.

## Claims

1. A pneumatic radial tire (11) comprising a carcass (17) toroidally extending between a pair of bead portions (13) and comprised of at least one rubberized ply (18) containing a plurality of cords (19) arranged substantially in a radial direction, a belt (21) arranged outside of the carcass in the radial direction and comprised of at least two belt layers (22,23) containing plural cords (24,25) embedded therein, the cords of which layers (22,23) being crossed with each other with respect to an equatorial plane (S) of the tire, a belt reinforcing member (30) arranged between the belt (21) and the carcass (17) and comprised of at least one belt reinforcing layer (31) containing a reinforcing element (32) embedded therein and extending in a circumferential direction while bending in wave or zigzag form, and a tread rubber (27) arranged outside of the belt in the radial direction, in which a belt protection member (35) containing reinforcing elements (37) embedded at an inclination angle (B) with respect to the equatorial plane larger than the inclination angle (A) of the cord (24,25) in the belt layer (22,23) is disposed in the vicinity of the belt (21), and a widthwise outer end (35a) of the belt protection member (35) is located outward from a widthwise outer end (30a) of the belt reinforcing member (30) in a widthwise direction of the tire.

2. A pneumatic tire as claimed in claim 1, **characterized in that** the widthwise outer end (35a) of the belt protection member (35) is located inward from the widthwise outer end (23a) of a belt layer (23) having a minimum width among the belt layers in the widthwise direction.

3. A pneumatic tire as claimed in claim 1 or 2, **characterized in that** the belt protection member (35) is disposed radially outside of an outermost belt layer (23) among the belt layers.

4. A pneumatic tire as claimed in any of claims 1 to 3, **characterized in that** an inclining direction of the reinforcing element (37) in the belt protection member (35) is the same as an inclining direction of the cord (25) in the belt layer (23) adjacent to the belt protection member (35).

5. A pneumatic tire as claimed in any of claims 1 to 4, **characterized in that** the inclination angle (B) of the reinforcing element (37) in the belt protection member (35) is not less than 30°C.

6. A pneumatic tire as claimed in claim 5, **characterized in that** said inclination angle (B) is 40-70°C.

7. A pneumatic tire as claimed in claim 3, **characterized in that** a cushion rubber layer (41) is arranged between the widthwise outer end portion of the belt protection member (35) and the widthwise outer end portion of the belt layer (23) adjacent to the belt protection member.

## Patentansprüche

1. Radialer Luftreifen (11), der aufweist: eine Karkasse (17), die sich ringförmig zwischen einem Paar Wulstabschnitten (13) erstreckt und mindestens aus einer gummierten Lage (18) besteht, die eine Vielzahl von Korden (19) enthält, die im wesentlichen in einer radialen Richtung angeordnet sind; einen Gürtel (21), der außerhalb der Karkasse in der radialen Richtung angeordnet ist und aus mindestens zwei Gürtelschichten (22, 23) besteht, die mehrere darin eingebettete Korde (24, 25) enthalten, wobei die Korde der Schichten (22, 23) miteinander mit Bezugnahme auf eine Äquatorialebene (S) des Reifens gekreuzt werden; ein Gürtelverstärkungselement (30), das zwischen dem Gürtel (21) und der Karkasse (17) angeordnet ist und aus mindestens einer Gürtelverstärkungsschicht (31) besteht, die ein darin eingebettetes Verstärkungselement (32) enthält und sich in einer Umfangsrichtung erstreckt, während eine Biegung in einer Wellen- oder Zickzackform erfolgt; und einen Laufflächengummi (27), der außerhalb des Gürtels in der radialen Richtung angeordnet ist, in dem ein Gürtelschutzelement (35) das Verstärkungselemente (37) enthält, die in einem Neigungswinkel (B) eingebettet sind, der mit Bezugnahme auf die Äquatorialebene größer als der Neigungswinkel (A) der Korde (24, 25) in der Gürtelschicht (22, 23) ist, in der Nähe des Gürtels (21) angeordnet ist, und ein äußeres Ende in Breitenrichtung (35a) des Gürtelschutzelements (35) nach außen von einem äußeren Ende in Breitenrichtung (30a) des Gürtelverstärkungselements (30) in einer Breitenrichtung des Reifens angeordnet ist.

2. Luftreifen nach Anspruch 1, **dadurch gekennzeichnet, dass** das äußere Ende in Breitenrichtung (35a) des Gürtelschutzelements (35) nach innen vom äußeren Ende in Breitenrichtung (23a) der Gürtelschicht (23) angeordnet ist und eine minimale Breite unter den Gürtelschichten in Breitenrichtung aufweist.

3. Luftreifen nach Anspruch 1 oder 2, **dadurch gekennzeichnet, dass** das Gürtelschutzelement (35) radial außerhalb einer äußersten Gürtelschicht (23) unter den Gürtelschichten angeordnet ist.

4. Luftreifen nach einem der Ansprüche 1 bis 3, **dadurch gekennzeichnet, dass** eine Neigungsrichtung des Verstärkungselements (37) im Gürtelschutzelement (35) die Gleiche ist wie eine Neigungsrichtung der Korde (25) in der neben dem Gürtelschutzelement (35) liegenden Gürtelschicht (23).

5. Luftreifen nach einem der Ansprüche 1 bis 4, **dadurch gekennzeichnet, dass** der Neigungswinkel (B) des Verstärkungselements (37) im Gürtelschutzelement (35) nicht weniger als 30°C beträgt.

6. Luftreifen nach Anspruch 5, **dadurch gekennzeichnet, dass** der Neigungswinkel (B) 40 bis 70°C beträgt.

7. Luftreifen nach Anspruch 3, **dadurch gekennzeichnet, dass** eine Polstergummischicht (41) zwischen dem äußeren Endabschnitt in Breitenrichtung des Gürtelschutzelements (35) und dem äußeren Endabschnitt in Breitenrichtung der neben dem Gürtelschutzelement liegenden Gürtelschicht (23) angeordnet ist.

## Revendications

1. Bandage pneumatique radial (11) comprenant une carcasse (17) s'étendant toroïdalement entre une paire de talons (13) et constituée d'au moins un pli caoutchouté (18) contenant une pluralité de cordes (19) agencées essentiellement dans une direction radiale, une ceinture (21) agencée à l'extérieur de la carcasse dans la direction radiale et constituée d'au moins deux nappes de ceinture (22, 23) contenant plusieurs cordes (24, 25) enrobées dans celles-ci, les cordes de ces nappes (22, 23) étant croisées les unes avec les autres par rapport à un plan équatorial (S) du pneu, un élément de renforcement de ceinture (30) agencé entre la ceinture (21) et la carcasse (17) et constitué d'au moins une nappe de renforcement de ceinture (31) contenant un élément de renforcement (32) enrobé dans celle-ci et s'étendant dans une direction circonférentielle tout en se courbant sous forme d'ondulation ou de zigzag, et un caoutchouc de bande de roulement (27) agencé à l'extérieur de la ceinture dans la direction radiale, dans lequel un élément de protection de ceinture (35) contenant des éléments de renforcement (37) enrobés à un angle d'inclinaison (B) par rapport au plan équatorial plus grand que l'angle d'inclinaison (A) de la corde (24, 25) dans la nappe de ceinture (22, 23) est disposé à proximité de la ceinture (21), et une extrémité extérieure en largeur (35a) de l'élément de protection de ceinture (35) est situé vers l'extérieur d'une extrémité extérieure en largeur (30a) de l'élément de renforcement de ceinture (30) dans une direction en largeur du pneu.

2. Bandage pneumatique comme revendiqué dans la revendication 1, **caractérisé en ce que** l'extrémité extérieure en largeur (35a) de l'élément de protection de ceinture (35) est situé vers l'intérieur de l'extrémité extérieure en largeur (23a) de la nappe de ceinture (23) ayant une largeur minimum parmi les nappes de ceinture dans la direction allant dans le sens de la largeur.

3. Bandage pneumatique comme revendiqué dans la revendication 1 ou 2, **caractérisé en ce que** l'élément de protection de ceinture (35) est disposée radialement à l'extérieur d'une nappe de ceinture la plus à l'extérieur (23) parmi les nappes de ceinture.

4. Bandage pneumatique comme revendiqué dans l'une quelconque des revendications 1 à 3, **caractérisé en ce que** la direction d'inclinaison de l'élément de renforcement (37) dans l'élément de protection de ceinture (35) est la même qu'une direction d'inclinaison de la corde (25) dans la nappe de ceinture (23) de manière adjacente à l'élément de protection de ceinture (35).

5. Bandage pneumatique comme revendiqué dans l'une quelconque des revendications 1 à 4, **caractérisé en ce que** l'angle d'inclinaison (B) de l'élément de renforcement (37) dans l'élément de protection de ceinture (35) n'est pas inférieur à 30°C.

6. Bandage pneumatique comme revendiqué dans la revendication 5, **caractérisé en ce que** ledit angle d'inclinaison (B) est de 40 à 70°C.

7. Bandage pneumatique comme revendiqué dans la revendication 3, **caractérisé en ce qu'**une nappe de caoutchouc de coussin (41) est agencée entre la partie d'extrémité extérieure en largeur de l'élément de protection de ceinture (35) et la partie d'extrémité extérieure en largeur de la nappe de ceinture (23) de manière adjacente à l'élément de protection de ceinture.
